# FASCICULE DE BREVET EUROPEEN

(11) **EP 3 924 130 B1**
(45) Date de publication et mention de la délivrance du brevet: **17.04.2024**
(21) Numéro de dépôt: 20708161.3
(22) Date de dépôt: 04.02.2020
(51) Int. Cl.: B23H 9/10, B23H 9/14, B23H 1/00

(54) **PROCEDE DE PERCAGE D'UN TROU DANS UNE PIECE EN MATERIAU ELECTROCONDUCTEUR**
VERFAHREN ZUM BOHREN EINES LOCHS IN EINEM TEIL AUS ELEKTRISCH LEITENDEM MATERIAL
METHOD FOR DRILLING A HOLE IN A PART MADE OF ELECTROCONDUCTIVE MATERIAL

(30) Priorité: 12.02.2019 FR 1901395
(43) Date de publication de la demande: 22.12.2021
(73) Titulaire: SAFRAN AIRCRAFT ENGINES, 75015 Paris (FR)
(72) Inventeur: HUARD, Pierre, Gaston, Clément, 77550 MOISSY-CRAMAYEL (FR); VAN DOORN, Antoine, 77550 MOISSY-CRAMAYEL (FR)
(74) Mandataire: Gevers & Orès
(86) Numéro de dépôt international: PCT/FR2020/050175
(87) Numéro de publication internationale: WO 2020/165522

(56) Documents cités:
- EP-A1- 0 616 868
- EP-B1- 0 616 868
- WO-A1-2006/078096
- JP-A- S58 114 821
- US-A- 6 140 600
- US-A1- 2008 173 618

## Description

### Domaine technique de l'invention

La présente invention concerne un procédé de perçage par électroérosion d'un trou dans une pièce en matériau électroconducteur, en particulier pour une turbomachine d'aéronef.

### Arrière-plan technique

L'état de la technique comprend, notamment les documents Wo-A1-2006/078096, US-A1-2008/173618, JP-A-S58114821 et US-A-6140600. Le document WO-A1- 2006/078096 divulgue les étapes a), b), d) et e) de la revendication 1.

Le perçage par électroérosion ou perçage EDM (acronyme de l'anglais *Electro Discharge Machining*) est un procédé d'usinage qui consiste à enlever de la matière dans une pièce en utilisant des décharges électriques. On parle aussi d'usinage par étincelage. Cette technique se caractérise par son aptitude à usiner tous les matériaux électroconducteurs (conducteurs de l'électricité) quelle que soit leur dureté.

Le procédé d'usinage consiste à faire passer un courant d'une électrode vers la pièce à travers un diélectrique, afin de générer une « bulle » de vapeur ou de vide qui s'ionise et se résorbe en implosant, entraînant la destruction de la matière de la pièce. Cette destruction (micro-implosion) provoque l'étincelle. Le courant de forte intensité ionise un canal à travers le diélectrique. Une décharge disruptive se produit alors entre l'électrode et la pièce à usiner, détériorant celle-ci très localement (quelque µm²). Ce procédé permet de percer des trous avec une très grande précision et est adapté pour des matériaux très durs ou encore dans les cas où la complexité de la pièce l'exige, comme c'est le cas de pièces d'une turbomachine d'aéronef.

Les aubes d'un distributeur de turbine d'une turbomachine d'aéronef comprennent par exemple des trous percés par un procédé EDM. L'aube est creuse et les trous traversent la paroi de l'aube pour assurer des passages d'air de ventilation entre la cavité interne de l'aube et la veine de la turbine.

La machine d'électroérosion comporte une tête qui est mobile vis-à-vis de la pièce à percer et qui porte l'électrode EDM. Cette électrode a une forme allongée et est destinée à être déplacée en translation le long de son axe d'allongement. Los d'une avance de l'électrode vers la pièce, l'étincelle se crée et la destruction de la matière de la pièce entraine la formation d'un trou avec un diamètre prédéfini. L'électrode est alors reculée et sortie du trou afin de réaliser d'autres perçages.

L'électrode est un consommable dans la mesure où elle s'use lors d'un perçage. L'usure de l'électrode se caractérise par une réduction de sa longueur. Une des problématiques du perçage EDM est qu'il est difficile de quantifier avec précision cette usure. Lors du perçage d'un trou, l'usure (réduction de longueur) de l'électrode est en général supérieure à la profondeur du trou percé, mais n'est toutefois par constante car elle peut varier d'un trou à l'autre.

Ce problème technique se combine à deux objectifs contradictoires qui sont de percer suffisamment la pièce pour réaliser un trou débouchant d'un seul coup (une seule avance d'électrode), mais ne pas trop avancer l'électrode pour ne pas risquer d'impacter et de percer la paroi opposée au trou, comme c'est le cas dans l'exemple précité du perçage d'une paroi d'aube de turbine.

Une solution à ce problème pourrait consister à contrôler le débouchage d'un trou au moyen d'une pige qui serait insérée manuellement par un opérateur dans le trou. La pige serait à un diamètre prédéterminé permettant de vérifier le diamètre du trou et serait enfoncé dans le trou pour s'assurer que la pige ne bute pas contre un fond du trou dans le cas où il ne serait pas débouchant. Dans le cas où un trou ne serait pas débouchant, l'opérateur activerait une étape de retouche avec la machine d'électroérosion.

Une autre solution consisterait à utiliser l'électrode EDM comme pige. Dans un tel cas, l'électrode utilisée pour le perçage d'un trou serait ensuite utilisée pour vérifier que ce trou est bien débouchant. Après le recul et le retrait de l'électrode du trou (étape b)), l'électrode pourrait à nouveau être avancée et insérer dans le trou. Dans le cas où le trou serait débouchant, elle pourrait être avancée d'une longueur supérieure à la profondeur théorique du trou. Dans le cas contraire, un fond du trou serait détecté par palpage et une étape de retouche devrait être activée. Cette solution ne serait toutefois pas fiable. En effet, en pratique, il serait difficile voire impossible de détecter par palpage avec précision le fond du trou non débouchant car l'étincelle de palpage qui devrait se créer théoriquement entre l'extrémité libre de l'électrode et le fond du trou, se créerait en pratique entre l'électrode et le bord périphérique ou la paroi latérale du trou, dès l'entrée de l'électrode dans le trou.

D'autres solutions consisteraient à contrôler uniquement le débouchage du trou (sans avoir la valeur de son diamètre), au moyen d'une caméra thermique, par détection de lumière à travers le trou, par injection de liquide dans la cavité interne de l'aube dans l'exemple précité, etc.

Toutes ces solutions ne sont toutefois pas entièrement satisfaisantes car elles sont le plus souvent complexes et longues à mettre en oeuvre.

La présente invention apporte une solution simple, efficace et économique à ce problème.

### Résumé de l'invention

La présente invention propose un procédé de perçage par électroérosion d'un trou dans une pièce en matériau électroconducteur, en particulier pour une turbomachine d'aéronef, le procédé utilisant une machine d'électroérosion comportant une tête mobile vis-à-vis de la pièce et portant une électrode EDM consommable qui a une forme allongée et qui est déplacée en translation le long de son axe d'allongement, le procédé comportant les étapes de :
a) avance de l'électrode EDM vers la pièce pour percer un trou dans la pièce,
b) recul de l'électrode EDM et sortie de l'électrode EDM du trou, caractérisé en ce qu'il comprend en outre une étape de :
c) déplacement latéral de la tête réalisé sur une distance représentant moins de 100% du diamètre du trou à percer,
d) avance de l'électrode EDM vers la pièce pour palper la pièce, et
e) calcul de la profondeur effective du trou percé à l'étape a) à partir d'une différence de côtes mesurées dans une direction
parallèle audit axe, entre une première position de l'électrode EDM à la fin de l'étape a), et une seconde position de l'électrode EDM à l'étape d) lorsqu'elle palpe la pièce.

Le procédé propose donc de déterminer la profondeur effective d'un trou et donc d'en déduire si le trou est débouchant ou non, par l'intermédiaire de la machine d'électroérosion et de son électrode EDM. L'électrode est utilisée de deux manières différentes. Elle est tout d'abord utilisée pour réaliser le perçage du trou lors de l'étape a). Elle est ensuite utilisée pour palper la pièce, à distance du trou. L'inconvénient évoqué ci-dessus avec la détection du fond d'un trou n'existe pas ici car l'étincelle de palpage peut apparaître sans difficulté entre l'extrémité libre de l'électrode et une surface externe de la pièce.

Dans la présente demande, on entend par palpage, un palpage ou une détection électrique d'une pièce électroconductrice par une électrode. Le palpage ou la détection de la pièce a lieu lorsque l'électrode est suffisamment proche de la pièce pour qu'une étincelle se crée entre l'électrode et la pièce. La puissance de l'étincelle doit être choisie pour ne pas détériorer la pièce puisque le but ici est simplement de détecter la pièce en vue d'en déduire des côtes. Les paramètres de la machine d'électroérosion seront donc différents selon que l'électrode est utilisée pour une fonction perçage ou une fonction palpage.

Par ailleurs, le procédé selon l'invention permet de proposer un déplacement latéral de la tête à l'étape c) sur une faible distance (inférieure à 100% du diamètre du trou à percer). Ceci présente plusieurs avantages dont un faible risque de percer un orifice ou un composant adjacent au trou à percer, un gain de temps sur les courses de déplacement de l'électrode, une optimisation de la durée de perçage du trou et de manière générale une optimisation du procédé dans son ensemble.

Le procédé selon l'invention peut comprendre une ou plusieurs des caractéristiques ou étapes ci-dessous, considérées seules ou en combinaison les unes avec les autres :
- le procédé comprend des étapes supplémentaires de :
   f) comparaison de la profondeur effective calculée avec une profondeur théorique, et
   g) dans le cas où la profondeur effective serait inférieure à la profondeur théorique, avance de l'électrode EDM vers la pièce et dans le trou percé à l'étape a) pour le percer davantage ;
- l'étape g) est réalisée de façon à ce que le trou soit débouchant.
- les étapes c), d) et e) sont répétées après l'étape g), et les étapes f) et g) sont éventuellement répétées après l'étape e) ;
- une première cote est déterminée et égale à la distance parcourue par l'électrode EDM dans ladite direction entre sa première position et une troisième position de l'électrode EDM à la fin de l'étape b), et une seconde cote est déterminée et égale à la distance parcourue par l'électrode EDM dans ladite direction entre cette troisième position et la seconde position de l'électrode EDM, la profondeur effective du trou percé étant égale à la différence entre les première et seconde cotes ;
- le déplacement à l'étape c) est réalisé sur une distance inférieure ou égale à 5mm, et de préférence inférieure ou égale à 1mm ;
- le déplacement à l'étape c) est réalisé sur une distance entre 40 et 70% du diamètre du trou à percer ;
- lors de l'étape a), l'électrode EDM est alimentée avec une tension supérieure ou égale à 100V et un courant supérieur à 1 ampère, et lors de l'étape d), l'électrode EDM est alimentée avec une tension inférieure à 100V et un courant inférieur à 1 ampère ;
- lors de l'étape a), l'électrode EDM est alimentée par des impulsions électriques dont le ratio du temps des impulsions sur le temps entre les impulsions est supérieur à 0,2, et de préférence compris entre 0,5 et 0,8, et lors de l'étape d), l'électrode EDM est alimentée par des impulsions électriques dont le ratio précité est inférieur à 0,2 ;
- lors de l'étape d), la polarité de l'électrode EDM est inversée par rapport à la polarité de l'électrode EDM lors de l'étape a) ;
- au début de l'étape a) et avant de percer le trou, l'électrode EDM est avancée vers la pièce jusqu'à une distance prédéterminée apte à créer une première étincelle ;
- cette distance prédéterminée est comprise entre une extrémité libre de l'électrode EDM et une surface de la pièce, de préférence cette distance prédéterminée est de 10 mm ;
- à l'étape d), l'électrode EDM est déplacée vers la pièce jusqu'à une distance prédéterminée apte à créer une étincelle de palpage ;
- à l'étape d), la distance est comprise entre une extrémité libre de l'électrode EDM et une surface de la pièce, de préférence cette distance prédéterminée est de 5 mm.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue très schématique d'une électrode EDM et d'une pièce à percer, et montre plusieurs étapes d'un procédé de perçage selon l'invention, et
[Fig. 2] La figure 2 est une vue similaire à celle de la figure 1 et montrant d'autres étapes du procédé.

### Description détaillée de l'invention

La présente invention concerne un procédé de perçage par électroérosion ou perçage EDM qui utilise une machine d'électroérosion, seule une électrode EDM 10 et une tête 12 de support de cette électrode étant représentées dans les dessins. Le reste de la machine n'est pas décrit ni représenté et fait partie des connaissances générales de l'homme du métier spécialisé dans le perçage EDM.

La tête 12 est mobile dans un plan H ainsi que dans une direction perpendiculaire à ce plan (axe Z).

L'électrode 10 a une forme allongée le long d'un axe d'allongement parallèle à l'axe Z. Dans l'exemple représenté, l'électrode 10 traverse un orifice de la tête et peut coulisser dans cet orifice.

L'électrode 10 est mobile le long de l'axe Z et peut ainsi être avancée ou reculée, une avance permettant par exemple de réaliser le perçage d'un trou 18, et un recul permettant de ressortir de ce trou.

La pièce 16 à percer est positionnée sous l'électrode 10 et la surface 16a sur laquelle le trou 18 doit être réalisé peut être positionnée perpendiculairement à l'axe Z si un trou normal à la surface doit être réalisé, ou de manière inclinée par rapport à cet axe X si un trou incliné par rapport à la surface doit être réalisé. La pièce 16 est par exemple en alliage métallique à base nickel et cobalt. En variante, la pièce pourrait être en matériau électroconducteur composite par exemple du type CMC.

La machine d'électroérosion est configurée pour utiliser l'électrode 10 de deux manières distinctes. Cette machine est par exemple celle du fabricant Winbro Group Technologies, de type HSD6.

L'électrode 10 a une première fonction de perçage par électroérosion. Les trous 18 à percer ont par exemple un diamètre compris entre 0,2 et 2mm. Ils sont de préférence débouchants. Dans le cas où les trous 18 sont orientés perpendiculairement à la surface 16a de la pièce, la profondeur théorique des trous est égale à l'épaisseur de la paroi à percer de la pièce et est par exemple comprise entre 1 et 10mm, et de préférence entre 2 et 5 mm.

Lorsqu'elle est utilisée en mode perçage, l'électrode 10 est alimentée avec un courant de forte intensité pour que l'étincelle produite entre l'électrode 10 et la pièce 16 soit suffisante pour détruire le matériau de la pièce et former le trou 18.

L'électrode 10 peut être alimentée avec une tension supérieure ou égale à 100V et un courant supérieur à 1 ampère. L'électrode 10 peut être alimentée par des impulsions électriques dont le ratio du temps des impulsions sur le temps entre les impulsions est supérieur à 0,2, et de préférence compris entre 0,5 et 0,8. Par ailleurs, l'électrode peut être reliée à une borne positive ou négative, donc peu importe sa polarité.

L'électrode 10 a une autre fonction de palpage ou de détection de la pièce. L'électrode 10 est alors alimentée avec un courant de plus faible intensité pour que l'étincelle produite entre l'électrode et la pièce ne détériore pas la pièce mais permette simplement de détecter sa présence et sa position.

L'électrode peut alors être alimentée avec une tension inférieure à 100V et un courant inférieur à 1 ampère. L'électrode peut être alimentée par des impulsions électriques dont le ratio précité est inférieur à 0,2. Enfin, la polarité de l'électrode est de préférence inversée par rapport à la polarité de l'électrode en fonction perçage.

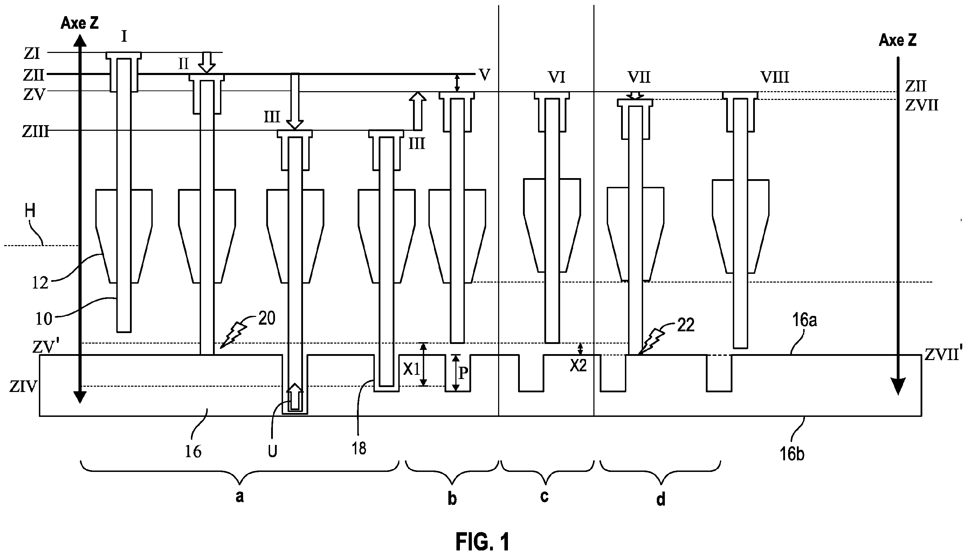

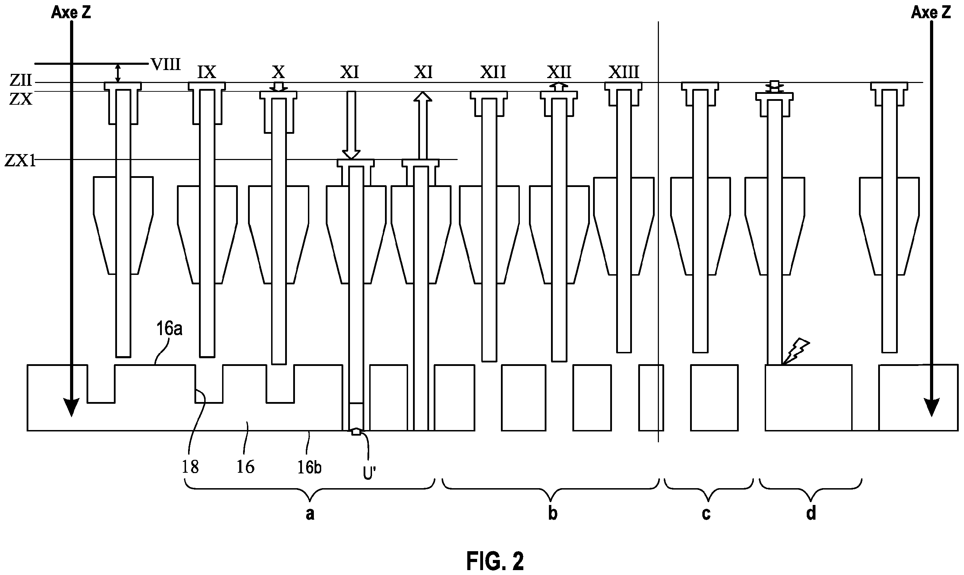

Les figures 1 et 2 représentent différentes étapes d'un mode de réalisation d'un procédé selon l'invention de perçage d'un trou 18 dans la pièce 16.

La figure 1 montre plusieurs positions différentes de l'électrode 10 et des étapes du procédé. Ces positions sont identifiées par les chiffres I à VIII.

La position I correspond à la position de départ de l'électrode 10, cette position correspond à une côte ZI sur l'axe Z. Dans l'exemple représenté, et de manière générale dans la suite de la description (sauf mention contraire), la côte de l'électrode est prise au niveau de son extrémité supérieure opposée à la pièce à percer.

Dans la position II, l'électrode 10 est avancée vers la pièce jusqu'à création d'une première étincelle 20, c'est-à-dire jusqu'à ce que la distance entre l'extrémité libre de l'électrode et la surface 16a de la pièce soit telle qu'une étincelle 20 peut être créée entre l'électrode et la pièce. Cette distance est typiquement de 10 mm. La position II correspond à une côte ZII sur l'axe Z.

L'électrode est encore avancée vers la pièce pour percer un trou 18. Elle atteint alors une position III qui correspond à une côte ZIII sur l'axe Z. La somme des côtes ZII et ZIII correspond à la course de descente nécessaire pour la réalisation du trou.

Cette course est déterminée pour que le trou soit débouchant mais l'usure U de l'électrode qui est difficile à prévoir avec précision peut entraîner le non débouchage du trou. Cette course est par exemple comprise entre 5 et 20mm, et est de préférence comprise entre 10 et 15mm. L'électrode se trouve dans la position III alors que son extrémité libre est à la côté ZIV et que le trou n'est pas débouchant.

Les positions respectives I, II et III correspondent à une première étape a) du procédé consistant à avancer l'électrode 10 vers la pièce pour percer un trou.

Une seconde étape b) du procédé consiste à reculer l'électrode et la sortir du trou. L'électrode est alors déplacée jusqu'à une position V située à une côté ZV, située entre les côtes ZII et ZIII. L'extrémité supérieure de l'électrode est à la côte ZV'. En variante, l'électrode pourrait être déplacée jusqu'à une position située à la côte ZII. Cependant, une usure minimale de l'électrode peut être estimée et la machine peut être paramétrée de façon à ce que le recul de l'électrode depuis la position III jusqu'à la position V tienne compte de cette usure. Ce recul doit être suffisant pour que l'électrode dans la position V ne soit pas susceptible de toucher la pièce. Comme une étincelle a été créée dans la position II lorsque l'électrode était à la côté ZII, on comprend que l'électrode, après son recul depuis la position III, pourrait être à la position II sans risque de toucher la pièce et également à la position V sans risque de toucher la pièce en tenant compte de cette usure minimale constatée de l'électrode lors du perçage d'un trou.

L'optimisation des courses de déplacement de l'électrode est particulièrement importante pour optimiser la durée de perçage d'un trou et du procédé dans son ensemble.

Le procédé comprend en outre une étape c) de déplacement latéral de la tête et donc de l'électrode jusqu'à une position VI. Dans la présente demande, on entend par déplacement latéral de la tête, un déplacement de la tête dans une direction perpendiculaire à l'axe de l'électrode. L'électrode reste à la même côte ZV. L'extrémité libre de l'électrode est à la côte ZV'. L'électrode est de préférence située au plus près du trou qui vient d'être réalisé.

Par exemple, le déplacement est réalisé sur une distance inférieure ou égale à 5mm, et de préférence inférieure ou égale à 1mm. Il peut être réalisé sur une distance représentant moins de 100% du diamètre du trou à percer, et de préférence entre 40 et 70% de ce diamètre.

Le procédé comprend ensuite une étape d) d'avance de l'électrode 10 vers la pièce pour palper la pièce. L'électrode est déplacée jusqu'à ce qu'une étincelle de palpage 22 puisse être créée, c'est-à-dire jusqu'à ce que la distance entre l'extrémité libre de l'électrode et la surface 16a de la pièce soit telle qu'une étincelle puisse être créée entre l'électrode et la pièce. Cette distance D2 est typiquement de 5 mm. Elle peut être différente de la distance pour la création de l'étincelle 20, dans la mesure où les paramètres de la machine sont différents. La position VII correspond à une côte ZVII sur l'axe Z. L'extrémité libre de l'électrode est à la côte ZVII'.

L'électrode peut alors être reculée et revenir dans une position VIII à la côte ZII.

Le procédé comprend une étape e) suivante de calcul de la profondeur effective du trou percé à l'étape a) à partir de la différence de côtes mesurées entre les positions III et VII.

Plus exactement, les positions III et VII sont utilisées pour déterminer une première distance (par la formule ZIV-ZV', en valeur absolue), qui correspond à la distance X1 parcourue par l'extrémité libre de l'électrode lorsque cette dernière est déplacée de la position III à la position V. Les positions VI et VII sont utilisées pour déterminer une seconde distance (par la formule ZVIII' et ZV', en valeur absolue), qui correspond à la distance X2 parcourue par l'extrémité libre de l'électrode lorsque cette dernière est déplacée de la position VI à la position VII.

La différence de côtes revient à mesurer la différence entre les distances X1 et X2 et représente donc la profondeur effective P du trou percé.

Le procédé peut comprendre des étapes f) et g) supplémentaires de comparaison de la profondeur effective P calculée avec une profondeur théorique, et dans le cas où la profondeur effective serait inférieure à la profondeur théorique, avance de l'électrode vers la pièce et dans le trou percé à l'étape a) pour le percer davantage, et le rendre de préférence débouchant.

Ces étapes sont illustrées à la figure 2.

L'électrode est initialement dans la position VIII et elle est déplacée latéralement dans la position IX qui est similaire à la position V, c'est-à-dire qu'elle est à une cote ZII tenant compte de l'usure de l'électrode.

L'électrode 10 est avancée vers la pièce et dans le trou de façon à percer davantage le trou. Elle se retrouve dans une position X en entrée du trou, à une côte ZX, puis dans une position XI, à une côte ZXI en fin de perçage, dans laquelle son extrémité libre doit en principe être alignée avec la surface interne 16b de la pièce ou être en dessous de cette surface. L'électrode a également subit une usure U' lors de ce perçage complémentaire.

La course entre les côtes ZX et ZXI est déterminée pour que le trou soit débouchant. Cette course peut être égale à la course entre les cotes ZII et ZIII.

L'électrode est ensuite reculée et retirée du trou jusqu'à une position XII située à la côté ZX, située entre les côtes ZII et ZXI. Comme décrit précédemment, une usure minimale de l'électrode peut être estimée et la machine peut être paramétrée de façon à ce que le recul de l'électrode depuis la position XI jusqu'à la position XII tienne compte de cette usure. Ce recul doit être suffisant pour que l'électrode dans la position XII ne soit pas susceptible de toucher la pièce.

L'électrode peut alors être amenée dans une position XIII située à la côte ZII.

Il est envisageable de vérifier à nouveau si le trou retouché après les étapes f) et g) est bien débouchant. Il suffit pour cela de calculer la profondeur effective du trou, comme indiqué ci-dessus, et de la comparer à la profondeur théorique. On comprend donc que les étapes c), d) et e) sont répétées, et que les étapes f) et g) pourraient éventuellement être répétées après l'étape e) s'il s'avère que le trou n'est pas débouchant même après une première opération de retouche par les étapes f) et g).

## Revendications

1. Procédé de perçage par électroérosion d'un trou (18) dans une pièce (16) en matériau électroconducteur, en particulier pour une turbomachine d'aéronef, le procédé utilisant une machine d'électroérosion comportant une tête (12) mobile vis-à-vis de la pièce et portant une électrode EDM (10) consommable qui a une forme allongée et qui est déplacée en translation le long de son axe d'allongement, le procédé comportant les étapes de :
a) avance de l'électrode EDM vers la pièce pour percer un trou dans la pièce,
b) recul de l'électrode EDM et sortie de l'électrode EDM du trou,
c) déplacement latéral de la tête sur une distance représentant moins de 100% du diamètre du trou à percer,
d) avance de l'électrode EDM vers la pièce pour palper la pièce, et
e) calcul de la profondeur effective du trou percé à l'étape a) à partir d'une différence de côtes mesurées dans une direction parallèle audit axe, entre une première position de l'électrode EDM à la fin de l'étape a), et une seconde position de l'électrode EDM à l'étape d) lorsqu'elle palpe la pièce.

2. Procédé selon la revendication 1, dans lequel il comprend des étapes supplémentaires de :
f) comparaison de la profondeur effective calculée avec une profondeur théorique, et
g) dans le cas où la profondeur effective serait inférieure à la profondeur théorique, avance de l'électrode EDM vers la pièce et dans le trou percé à l'étape a) pour le percer davantage.

3. Procédé selon la revendication 2, dans lequel l'étape g) est réalisée de façon à ce que le trou soit débouchant.

4. Procédé selon la revendication 2 ou 3, dans lequel les étapes c), d) et e) sont répétées après l'étape g), et les étapes f) et g) sont éventuellement répétées après l'étape e).

5. Procédé selon l'une des revendications précédentes, dans lequel une première côte est déterminée et égale à la distance parcourue par l'électrode EDM dans ladite direction entre sa première position et une troisième position de l'électrode EDM à la fin de l'étape b), et une seconde côté est déterminée et égale à la distance parcourue par l'électrode EDM dans ladite direction entre cette troisième position et la seconde position de l'électrode EDM, la profondeur effective du trou percé étant égale à la différence entre les première et seconde côtes

6. Procédé selon l'une des revendications précédentes, dans lequel le déplacement à l'étape c) est réalisé sur une distance entre 40 et 70% du diamètre du trou.

7. Procédé selon l'une des revendications précédentes, dans lequel le déplacement à l'étape c) est réalisé sur une distance inférieure ou égale à 5mm, et de préférence inférieure ou égale à 1mm.

8. Procédé selon l'une des revendications précédentes, dans lequel, lors de l'étape a), l'électrode EDM est alimentée avec une tension supérieure ou égale à 100V et un courant supérieur à 1 ampère, et lors de l'étape d), l'électrode EDM est alimentée avec une tension inférieure à 100V et un courant inférieur à 1 ampère.

9. Procédé selon l'une des revendications précédentes, dans lequel, lors de l'étape a), l'électrode EDM est alimentée par des impulsions électriques dont le ratio du temps des impulsions sur le temps entre les impulsions est supérieur à 0,2, et de préférence compris entre 0,5 et 0,8, et lors de l'étape d), l'électrode EDM est alimentée par des impulsions électriques dont le ratio précité est inférieur à 0,2.

10. Procédé selon l'une des revendications précédentes, dans lequel, lors de l'étape d), la polarité de l'électrode EDM est inversée par rapport à la polarité de l'électrode EDM lors de l'étape a).

11. Procédé selon l'une des revendications précédentes, dans lequel au début de l'étape a) et avant de percer le trou, l'électrode EDM est avancée vers la pièce (16) jusqu'à une distance prédéterminée apte à créer une première étincelle (20).

12. Procédé selon la revendication précédente, cette distance prédéterminée est comprise entre une extrémité libre de l'électrode EDM (10) et une surface (16a) de la pièce (16), de préférence cette distance prédéterminée est de 10 mm.

13. Procédé selon l'une des revendications précédentes, dans lequel à l'étape d), l'électrode EDM est déplacée vers la pièce (16) jusqu'à une distance prédéterminée (D2) apte à créer une étincelle de palpage (22).

14. Procédé selon la revendication précédente, dans lequel à l'étape d), la distance (D2) est comprise entre une extrémité libre de l'électrode EDM (10) et une surface (16a) de la pièce (16), de préférence cette distance prédéterminée est de 5 mm.

## Patentansprüche

1. Verfahren zum Bohren durch Funkenerosion eines Lochs (18) in ein Werkstück (16) elektrisch leitendem Material, insbesondere für ein Turbotriebwerk eines Luftfahrzeugs, wobei das Verfahren eine Funkenerosionsmaschine verwendet, die einen gegenüber dem Werkstück beweglichen Kopf (12) beinhaltet, und eine EDM-Abschmelzelektrode (10) trägt, die eine längliche Form aufweist und die im Vorschub entlang ihrer Verlängerungsachse verschoben wird, wobei das Verfahren die Schritte beinhaltet zum:
a) Vorwärtsbewegen der EDM-Elektrode zum Werkstück, um ein Loch in das Werkstück zu bohren,
b) Rückwärtsbewegen der EDM-Elektrode und Herausziehen der EDM-Elektrode aus dem Loch,
c) seitlichen Verschieben des Kopfes um eine Distanz, die weniger als 100% des Durchmessers des zu bohrenden Lochs darstellt,
d) Vorwärtsbewegen der EDM-Elektrode zum Werkstück, um das Werkstück abzutasten, und
e) Berechnen der tatsächlichen Tiefe des in Schritt a) gebohrten Lochs aus einer Differenz der in einer parallelen Richtung zur Achse gemessenen Maße, zwischen einer ersten Position der EDM-Elektrode am Ende des Schrittes a), und einer zweiten Position der EDM-Elektrode im Schritt d) wenn sie das Werkstück abtastet.

2. Verfahren nach Anspruch 1, wobei es die zusätzlichen Schritte umfasst zum:
f) Vergleichen der tatsächlichen berechneten Tiefe mit einer theoretischen Tiefe, und
g) für den Fall, dass die tatsächliche Tiefe geringer als die theoretische Tiefe wäre, Vorwärtsbewegen der EDM-Elektrode zum Werkstück und in das in Schritt a) gebohrte Loch, um es weiter zu bohren.

3. Verfahren nach Anspruch 2, wobei der Schritt g) derart durchgeführt wird, dass das Loch durchgehend ist.

4. Verfahren nach Anspruch 2 oder 3, wobei die Schritte c), d) und e) nach dem Schritt g) wiederholt werden, und die Schritte f) und g) eventuell nach dem Schritt e) wiederholt werden.

5. Verfahren nach einem der vorstehenden Ansprüche, wobei ein erstes Maß bestimmt wird, und gleich der von der EDM-Elektrode in der Richtung zwischen ihrer ersten Position und einer dritten Position der EDM-Elektrode am Ende des Schritts b) zurückgelegten Distanz, und ein zweites Maß bestimmt wird, und gleich von der EDM-Elektrode in der Richtung zwischen dieser dritten Position und der zweiten Position der EDM-Elektrode zurückgelegten Distanz, wobei die tatsächliche Tiefe des gebohrten Lochs gleich der Differenz zwischen dem ersten und zweiten Maß ist

6. Verfahren nach einem der vorstehenden Ansprüche, wobei die Verschiebung im Schritt c) über eine Distanz zwischen 40 und 70% des Durchmessers des Lochs durchgeführt wird.

7. Verfahren nach einem der vorstehenden Ansprüche, wobei die Verschiebung im Schritt c) über eine Distanz kleiner oder gleich 5 mm, vorzugsweise kleiner oder gleich 1 mm durchgeführt wird.

8. Verfahren nach einem der vorstehenden Ansprüche, wobei die EDM-Elektrode im Schritt a) mit einer Spannung größer oder gleich 100V und einem Strom größer als 1 Ampere versorgt wird, und die EDM-Elektrode im Schritt d) mit einer Spannung kleiner als 100V und einem Strom kleiner als 1 Ampere versorgt wird.

9. Verfahren nach einem der vorstehenden Ansprüche, wobei die EDM-Elektrode im Schritt a) durch elektrische Impulse versorgt wird, bei denen das Verhältnis der Impulszeit zur Zeit zwischen den Impulsen 0,2 ist, und vorzugsweise zwischen 0,5 und 0,8 liegt, und die EDM-Elektrode im Schritt d) durch elektrische Impulse versorgt wird, bei denen das zuvor erwähnte Verhältnis geringer als 0,2 ist.

10. Verfahren nach einem der vorstehenden Ansprüche, wobei die Polarität der EDM-Elektrode im Schritt d) in Bezug auf die Polarität der EDM-Elektrode im Schritt a) umgekehrt ist.

11. Verfahren nach einem der vorstehenden Ansprüche, wobei die EDM-Elektrode im Schritt a) und vor dem Bohren des Lochs zum Werkstück (16) bis zu einer vorbestimmten Distanz vorwärtsbewegt wird, die imstande ist, einen ersten Funken (20) zu erzeugen.

12. Verfahren nach dem vorstehenden Anspruch, wobei diese vorbestimmte Distanz zwischen einem freien Ende der EDM-Elektrode (10) und einer Oberfläche (16a) des Werkstücks (16) liegt, wobei diese vorbestimmte Distanz vorzugsweise 10 mm beträgt.

13. Verfahren nach einem der vorstehenden Ansprüche, wobei die EDM-Elektrode im Schritt d) zum Werkstück (16) bis zu einer vorbestimmten Distanz (D2) vorwärtsbewegt wird, die imstande ist, einen Abtastfunken (22) zu erzeugen.

14. Verfahren nach dem vorstehenden Anspruch, wobei die Distanz (D2) im Schritt d) zwischen einem freien Ende der EDM-Elektrode (10) und einer Oberfläche (16a) des Werkstücks (16) liegt, wobei diese vorbestimmte Distanz vorzugsweise 5 mm beträgt.

## Claims

1. A method for electrical discharge drilling of a hole (18) in a part (16) made of electroconductive material, in particular for an aircraft turbomachine, the method using an electrical discharge machine comprising a head (12) that can move relative to the part and carrying a consumable EDM electrode (10) which is of elongated shape and is moved in translation along its elongation axis, the method comprising the steps of:
a) advancing the EDM electrode towards the part in order to drill a hole in the part,
b) retracting the EDM electrode and removing the EDM electrode from the hole,
c) laterally moving the head over a distance representing less than 100% of the diameter of the hole to be drilled,
d) advancing the EDM electrode towards the part in order to scan the part, and
e) calculating the effective depth of the hole drilled in step a) from a difference in the measured sides in a direction parallel to said axis, between a first position of the EDM electrode at the end of step a), and a second position of the EDM electrode in step d) when scanning the part.

2. The method of claim 1, wherein it comprises the further steps of:
f) comparing the calculated effective depth with a theoretical depth, and
g) in the event that the effective depth is less than the theoretical depth, advancing the EDM electrode towards the part and into the hole drilled in step a) to drill it further.

3. The method of claim 2, wherein step g) is performed so that the hole opens out.

4. The method of claim 2 or 3, wherein steps c), d) and e) are repeated after steps g), and steps f) and g) are optionally repeated after step e).

5. The method according to any one of the preceding claims, wherein a first side is determined and equal to the distance travelled by the EDM electrode in said direction between its first position and a third position of the EDM electrode at the end of step b), and a second side is determined and equal to the distance travelled by the EDM electrode in said direction between that third position and the second position of the EDM electrode, the effective depth of the drilled hole being equal to the difference between the first and second sides.

6. The method according to any one of the preceding claims, wherein the displacement in step c) is performed over a distance between 40 and 70 % of the diameter of the hole.

7. The method according to any one of the preceding claims, wherein the displacement in step c) is performed over a distance of less than or equal to 5mm, and preferably less than or equal to 1mm.

8. The method according to any one of the preceding claims, wherein in step a), the EDM electrode is supplied with a voltage greater than or equal to 100V and a current greater than 1 ampere, and in step d), the EDM electrode is supplied with a voltage less than 100V and a current less than 1 ampere.

9. The method according to any one of the preceding claims, wherein in step a) the EDM electrode is supplied with electrical pulses, wherein the ratio of the time of the pulses on the time between the pulses is greater than 0.2, and preferably between comprises between 0.5 and 0.8, and in step d) the EDM electrode is supplied with electrical pulses, the aforesaid ratio of which is less than 0.2.

10. The method according to any one of the preceding claims, wherein in step d) the polarity of the EDM electrode is reversed with respect to the polarity of the EDM electrode in step a).

11. The method according to any one of the preceding claims, wherein at the beginning of step a) and before drilling the hole, the EDM electrode is advanced towards the part (16) to a predetermined distance suitable for creating a first spark (20).

12. The method according to the preceding claim, this predetermined distance is between a free end of the EDM electrode (10) and a surface (16a) of the part (16), preferably this predetermined distance is 10 mm.

13. The method according to any one of the preceding claims, wherein in step d) the EDM electrode is moved towards the part (16) to a predetermined distance (D2) suitable for creating a scanning spark (22).

14. The method according to the preceding claim, wherein in step d) the distance (D2) is between a free end of the EDM electrode (10) and a surface (16a) of the part (16), preferably this predetermined distance is 5 mm.
